Europäisches Patentamt

European Patent Office

Office européen des brevets

(11) Publication number: 0 347 467
A1

# EUROPEAN PATENT APPLICATION
published in accordance with Art. 158(3) EPC

(21) Application number: 88909380.3

(22) Date of filing: 27.10.88

Data of the International application taken as a basis:

(86) International application number:
PCT/JP88/01096

(87) International publication number:
WO89/05483 (15.06.89 89/13)

(51) Int. Cl.³: G 05 B 19/18
G 05 B 19/415

(30) Priority: 10.12.87 JP 312481/87

(43) Date of publication of application:
27.12.89 Bulletin 89/52

(84) Designated Contracting States:
CH DE FR GB IT LI

(71) Applicant: FANUC LTD
3580, Shibokusa Aza-Komanba Oshino-mura
Minamitsuru-gun Yamanashi 401-05(JP)

(72) Inventor: KAWAMURA, Hideaki
1375-5, Naraharamachi Hachioji-shi
Tokyo 193(JP)

(72) Inventor: FUJIBAYASHI, Kentaro
2-8-6, Nishikubo Musashino-shi
Tokyo 180(JP)

(72) Inventor: HIDAKA, Yosato
Haimuizumi 102 2-35-12, Nakamachi
Setagaya-ku Tokyo 158(JP)

(74) Representative: Brunner, Michael John et al,
GILL JENNINGS & EVERY 53-64 Chancery Lane
London WC2A 1HN(GB)

(54) CNC CONTROL SYSTEM.

(57) A CNC control system for controlling the axes on the side of the CNC (20) from a PMC (10) coupled to the CNC (20). Instruction values of the axes and group classification data are sent from the PMC (10) to the CNC (20) which then in-itiates the pulse distribution after the instructions of the same group are all received. Therefore, movements can be started simultaneously on a plurality of arbitrarily combined axes on the side of the CNC (20).

FIG. 1

0347467

# D E S C R I P T I O N

## COMPUTERIZED NUMERICAL CONTROL SYSTEM

### Technical Field

The present invention relates to a computerized numerical control (CNC) system for controlling the axes of a computerized numerical control apparatus from a programmable machine controller (PMC) coupled to the computerized numerical control apparatus, and more particularly to a computerized numerical control system for synchronously controlling the axes of the computerized numerical control apparatus.

### Background Art

There are widely used systems for controlling machines with computerized numerical control (CNC) apparatus to which programmable machine controllers (PMC) are coupled. The axes of a computerized numerical control apparatus are controlled from a programmable machine controller by command signals applied through a common RAM. With this arrangement, the axes of the CNC apparatus can be controlled by a user program stored in the PMC.

However, command signals from the PMC are applied respectively for the individual axes, and hence these axes of the CNC apparatus can only be controlled asynchronously. There is no information regarding the grouping of the axes, etc. Therefore, the axes of the CNC apparatus cannot be operated in relation to each other for automatic tool changing (ATC) operation.

## Disclosure of the Invention

It is an object of the present invention to provide a computerized numerical control system which will solve the aforesaid problems of the conventional computerized numerical control methods, and which synchronously controls the axes of a computerized numerical control apparatus with command signals from a programmable machine controller.

To solve the above problems, there is provided in accordance with the present invention a computerized numerical control system for controlling the axes of a computerized numerical control apparatus from a programmable machine controller coupled to the computerized numerical control apparatus, the computerized numerical control system comprising: means for sending command values for the axes and information with respect to the grouping of the axes, from the programmable machine controller to the computerized numerical control apparatus; and means for starting to distribute pulses to axes when all commands for the axes in the respective groups are received by the computerized numerical control apparatus.

When commands including the information with respect to the grouping of the axes are received from the programmable machine controller, the computerized numerical control apparatus waits for starting to move the axes in the groups until all commands for the axes in the groups are received. The computerized numerical control apparatus starts moving the axes in the groups when the commands for the axes in the groups are received all together.

Brief Description of the Drawings

FIG. 1 is a block diagram of a computerized numerical control system according to an embodiment of the present invention; and

FIG. 2 is a diagram illustrating the grouping of axes.

Best Mode for Carrying Out the Invention

An embodiment of the present invention will hereinafter be described with reference to the drawings.

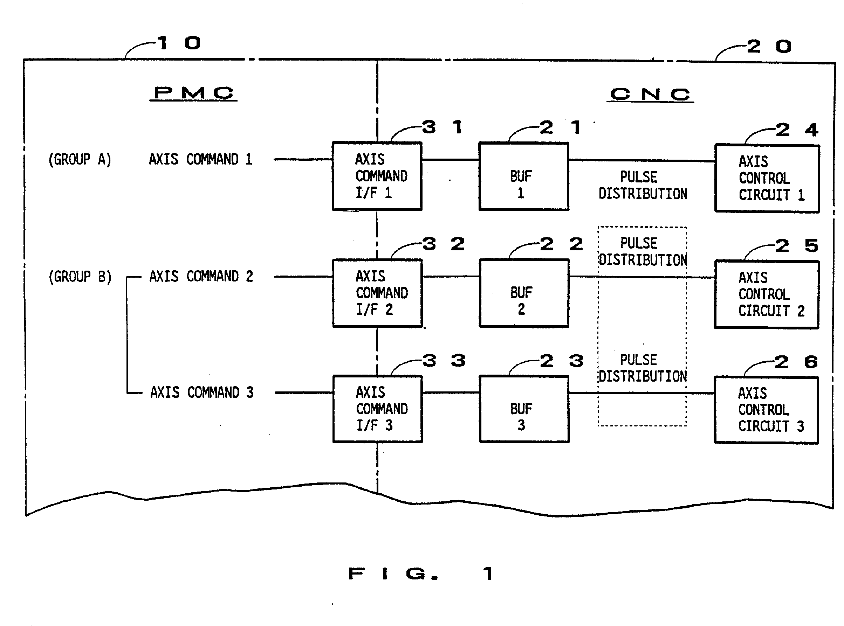

FIG. 1 shows in block form a computerized numerical control system according to an embodiment of the present invention. A programmable machine controller (PMC) 10 is coupled to a computerized numerical control (CNC) apparatus 20 and issues command signals for controlling three axes of the CNC apparatus 20.

Commands are send from the PMC 10 to axis command interfaces 31, 32, 33 through a common RAM. Command values from the PMC 10 are temporarily stored in buffers 21, 22, 23. Axis control circuits 24, 25, 26 are responsive to commands from the buffers 21, 22, 23 for controlling servomotors or the like (not shown).

In FIG. 1, a first axis belongs to a group A, and second and third axes to a group B. Command values for the second and third axes are stored in the buffers 22, 23 and simultaneously start to be distributed for enabling the second and third axes to start moving at the same time. The grouping of the axes can be varied according to commands from the PMC 10. Consequently, any desired combination of axes of the CNC apparatus 20 can synchronously be controlled.

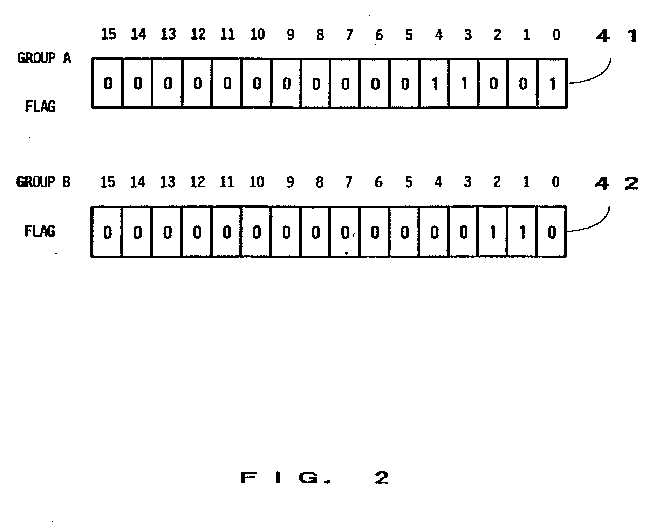

FIG. 2 illustrates the grouping of the axes. The group A is indicated by a flag 41, and the group B is indicated by a flag 42. The 0th bit position in each of the flags 41, 42 represents the first axis of the CNC apparatus 20. In the 0th bit position, a "1" bit is placed in the flag 41 for the group A, and hence the first axis is assigned to the group A. The 1st bit position represents the second axis of the CNC apparatus. In the 1st bit position, a "1" bit is placed in the flag 42 for the group B, and hence the second axis is assigned to the group B. The 2nd bit position indicates the third axis of the CNC apparatus 20. The third axis is assigned to the group B since a "1" bit is placed in the 2nd bit position in the flag 42.

Therefore, the first axis of the CNC apparatus 20 belongs to the group A, whereas the second and third axes thereof belong to the group B, with the second and third axes executing their motions in synchronism with each other.

The CNC apparatus has been described as having three axes. However, any desired number of axes may be commanded similarly. While flags have been used for grouping the axes in the illustrated embodiment, other means such as for directly specifying groups for the axes may be employed.

With the present invention, as described above, moving commands and grouping information for the axes are commanded from the PMC to the CNC apparatus for controlling the axes of the CNC apparatus. It is thus possible to control any desired combination of axes of the CNC apparatus to start moving simultaneously. This control capability is highly advantageous in the control of an automatic tool changing (ATC) mode which is commanded by the PMC.

CLAIM

A computerized numerical control system for controlling the axes of a computerized numerical control apparatus from a programmable machine controller coupled to the computerized numerical control apparatus, said computerized numerical control system comprising:

means for sending command values for the axes and information with respect to the grouping of the axes, from the programmable machine controller to the computerized numerical control apparatus; and

means for starting to distribute pulses to axes when all commands for the axes in the respective groups are received by the computerized numerical control apparatus.

F I G. 1

0347467

0347467

| | 15 | 14 | 13 | 12 | 11 | 10 | 9 | 8 | 7 | 6 | 5 | 4 | 3 | 2 | 1 | 0 | 4 1 |
|---|----|----|----|----|----|----|---|---|---|---|---|---|---|---|---|---|-----|
| GROUP A<br>FLAG | 0 | 0 | 0 | 0 | 0 | 0 | 0 | 0 | 0 | 0 | 0 | 1 | 1 | 0 | 0 | 1 | |

| GROUP B | 15 | 14 | 13 | 12 | 11 | 10 | 9 | 8 | 7 | 6 | 5 | 4 | 3 | 2 | 1 | 0 | 4 2 |
|---------|----|----|----|----|----|----|---|---|---|---|---|---|---|---|---|---|-----|
| FLAG | 0 | 0 | 0 | 0 | 0 | 0 | 0 | 0 | 0 | 0 | 0 | 0 | 0 | 1 | 1 | 0 | |

F I G. 2

# INTERNATIONAL SEARCH REPORT

International Application No  PCT/JP88/01096

## I. CLASSIFICATION OF SUBJECT MATTER (if several classification symbols apply, indicate all) 6

According to International Patent Classification (IPC) or to both National Classification and IPC

Int.Cl$^4$  G05B19/18, 19/415

## II. FIELDS SEARCHED

### Minimum Documentation Searched 7

| Classification System | Classification Symbols |
|---|---|
| IPC | G05B19/18, 19/415 |

Documentation Searched other than Minimum Documentation
to the Extent that such Documents are Included in the Fields Searched 8

| | |
|---|---|
| Jitsuyo Shinan Koho | 1971 – 1988 |
| Kokai Jitsuyo Shinan Koho | 1971 – 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 61-260304 (Mitsubishi Electric Corporation) 18 November 1986 (18. 11. 86) Page 2, lower left column, line 18 to lower right column, line 16 (Family: none) | 1 |
| A | JP, A, 62-237503 (Yokogawa Electric Corp.) 17 October 1987 (17. 10. 87) Page 2, lower left column, line 5 to page 3, upper right column, line 5 (Family: none) | 1 |
| A | JP, A, 60-3006 (Kogyo Gijutsuin-cho) 9 January 1985 (09. 01. 85) Page 2, upper left column, line 6 to upper right column, line 14 (Family: none) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 25, 1988 (25. 11. 88) | December 12, 1988 (12. 12. 88) |

| International Searching Authority | Signature of Authorized Officer |
|---|---|
| Japanese Patent Office | |

Form PCT/ISA/210 (second sheet) (January 1985)